# FASCICULE DE BREVET EUROPEEN

(11) **EP 1 209 890 B1**
(45) Date de publication et mention de la délivrance du brevet: **26.03.2008**
(21) Numéro de dépôt: 01402971.4
(22) Date de dépôt: 20.11.2001
(51) Int. Cl.: H04M 11/04

(54) **Installation de surveillance à distance sécurisée d'un site**
Anlage zur sicheren Fernüberwachung eines Standorts
Secure remote site monitoring apparatus

(30) Priorité: 22.11.2000 FR 0015085
(43) Date de publication de la demande: 29.05.2002
(73) Titulaire: FRANCE TELECOM, 75015 Paris (FR)
(72) Inventeur: Martzloff, François, 92100 Boulogne (FR)
(74) Mandataire: Habasque, Etienne J. Jean-François

(56) Documents cités:
- EP-A- 0 770 953
- EP-A- 0 940 675
- WO-A-00/10317
- WO-A-00/36812
- US-A- 5 438 607
- US-A- 6 075 451

## Description

La présente invention concerne une installation de surveillance à distance sécurisée d'un site.

Plus particulièrement, la présente invention concerne une installation de surveillance à distance d'au moins un site à surveiller à partir d'un site de surveillance, raccordés entre eux par des moyens de transmission d'informations, le site à surveiller comportant des moyens de surveillance de ce site comprenant des moyens d'acquisition d'informations de surveillance, raccordés à des premiers moyens d'émission/réception de ces informations de surveillance, eux-mêmes raccordés aux moyens de transmission d'informations et le site de surveillance comportant des seconds moyens d'émission/réception d'informations raccordés aux moyens de transmission d'informations et à des moyens d'analyse des informations de surveillance.

En général, une telle installation comporte des caméras de surveillance ou des détecteurs de mouvement disposés sur le site à surveiller. Dès qu'un événement suspect est détecté par ces moyens d'acquisition, des informations de surveillance sont automatiquement transmises au site de surveillance au moyen d'une communication téléphonique véhiculée par un réseau téléphonique classique. Les informations sont traitées par les moyens d'analyse du site de surveillance, puis une alarme est déclenchée si une intrusion suspecte sur le site à surveiller est effectivement détectée. Cette alarme provoque par exemple une intervention immédiate d'un surveillant sur le site à surveiller.

Cependant, cette installation présente des inconvénients.

En effet, elle ne garantit pas que la liaison entre le site à surveiller et le site de surveillance soit toujours opérationnelle. La ligne téléphonique utilisée comme un moyen de transmission peut être victime d'aléas non détectables par le site de surveillance, tels que des bouclages, des dérivations, des brouillages, ou d'autres manipulations frauduleuses ou perturbations accidentelles de cette ligne, entravant la communication d'un événement suspect, détecté par les moyens d'acquisition d'informations du site à surveiller, au site de surveillance.

Enfin, rien ne garantit que des informations de surveillance reçues par le site de surveillance proviennent effectivement du site à surveiller, des détournements frauduleux de lignes étant techniquement possibles.

De l'état de la technique relatif à des installations de surveillance est également divulgué dans WO 00 10317 A.

L'invention vise à remédier aux inconvénients des installations de surveillance à distance de l'état de la technique, en créant une installation garantissant l'intégrité des moyens de transmission des informations de surveillance et l'origine des informations transmises.

A cet effet, l'invention a pour objet une installation de surveillance à distance d'au moins un site à surveiller conforme à la revendication 1.

Une installation selon l'invention peut en outre comporter l'une ou plusieurs des caractéritiques apparaissant dans les revendications dépendantes.

L'invention sera mieux comprise à l'aide de la description qui va suivre, donnée uniquement à titre d'exemple et faite en se référant aux dessins annexés sur lesquels :
- la Fig. 1 représente un schéma synoptique d'une installation de surveillance à distance selon l'invention ;
- la Fig. 2 représente un schéma synoptique de moyens d'émission/réception disposés sur un site à surveiller, pour l'installation représentée à la figure 1 ;
- la Fig. 3 représente, sous la forme d'un organigramme, un procédé d'échange d'informations sécurisé pour l'installation de la figure 1 ; et
- la Fig. 4 représente, sous la forme d'un organigramme, un procédé de surveillance de canaux de transmission de l'installation de la figure 1.

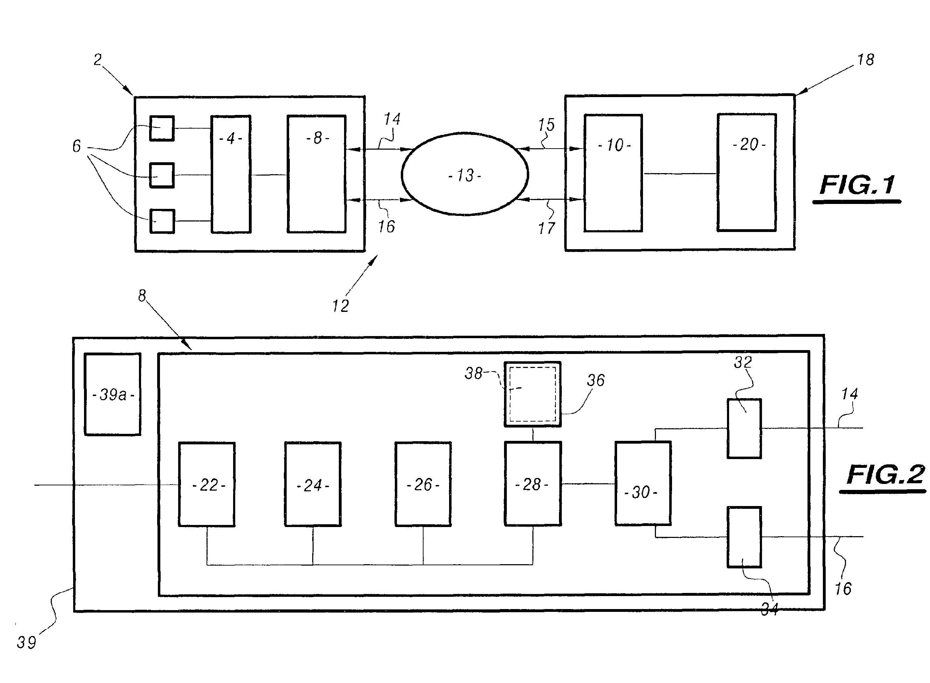

L'installation représentée à la figure 1 comporte, dans un site à surveiller 2, des moyens de surveillance 4 de ce site comprenant des moyens 6 d'acquisition d'informations de surveillance, tels que des caméras de vidéosurveillance, des détecteurs de mouvement ou bien des capteurs sonores par exemple.

Ces moyens de surveillance 4 sont raccordés à des premiers moyens 8 d'émission/réception d'informations disposés dans le site à surveiller, pour la transmission des informations de surveillance à des seconds moyens 10 d'émission/réception d'informations à travers des moyens de transmission d'informations 12.

Ces moyens de transmission d'informations 12 comportent un réseau 13 de transmission d'informations, tel qu'un réseau de télécommunication classique ou une multiplicité de réseaux de télécommunication de type classique.

Les moyens de transmission d'informations 12 comportent en outre un canal principal 14 à tarification forfaitaire des transmissions, de type ADSL par exemple, reliant les premiers moyens 8 d'émission/réception d'informations au réseau 13.

Selon un autre mode de réalisation de l'installation, le canal principal 14 pourrait être choisi parmi l'un des éléments de l'ensemble constitué par un réseau câblé de vidéotransmission, une liaison SDSL, un canal D et, éventuellement, un ou deux canaux B sur Réseau Numérique à Intégration de Services, un réseau de radiocommunication à ressources partagées, une boucle locale de radiocommunication, un réseau de type GPRS, un réseau de type DECT et un réseau de type UMTS.

Les moyens de transmission d'informations 12 comportent en outre un canal de secours 16, dont le support physique de transmission est différent de celui du canal principal 14, de type réseau GSM par exemple, reliant les premiers moyens 8 d'émission/réception d'informations au réseau 13.

Selon un autre mode de réalisation de l'installation, ce canal de secours 16 pourrait être choisi parmi l'un des éléments de l'ensemble constitué par un réseau câblé de vidéotransmission, une liaison ADSL, une liaison SDSL, un canal D et, éventuellement, un ou deux canaux B sur Réseau Numérique à Intégration de Services, un réseau de radiocommunication à ressources partagées, une boucle locale de radiocommunication, un réseau de type GPRS, un réseau de type DECT et un réseau de type UMTS.

Enfin, les moyens de transmission d'informations 12 comportent des moyens de raccordement des seconds moyens 10 d'émission/réception du site de surveillance 18 au réseau 13. Ces moyens de raccordement comportent une liaison 15 filaire de transmission à haut débit avec double parcours de type classique, et une liaison hertzienne 17, utilisée en cas de défaillance de la liaison filaire 15.

Les seconds moyens 10 d'émission/réception d'informations sont disposés dans un site de surveillance 18 comportant en outre des moyens 20 d'analyse des informations de surveillance raccordés aux moyens 10 d'émission/réception de ces informations.

Les premiers moyens 8 d'émission/réception d'informations, représentés plus en détail à la figure 2, comportent une interface 22 d'entrée/sortie raccordée aux moyens de surveillance 4 pour la réception d'informations de surveillance en provenance des moyens d'acquisition 6 ou l'émission de signaux de commande à destination de ces mêmes moyens d'acquisition 6.

Les premiers moyens 8 d'émission/réception d'informations comportent également des moyens 24 de génération de flux binaire, pour l'élaboration d'un flux binaire comprenant d'une part des données numériques d'informations constituant un message et d'autre part des données numériques supplémentaires précisant le type ou l'origine de ce message.

Un module de cryptographie asymétrique 26 de type classique assure le codage et le décodage des flux binaires émis ou reçus par les premiers moyens 8 d'émission/réception d'informations.

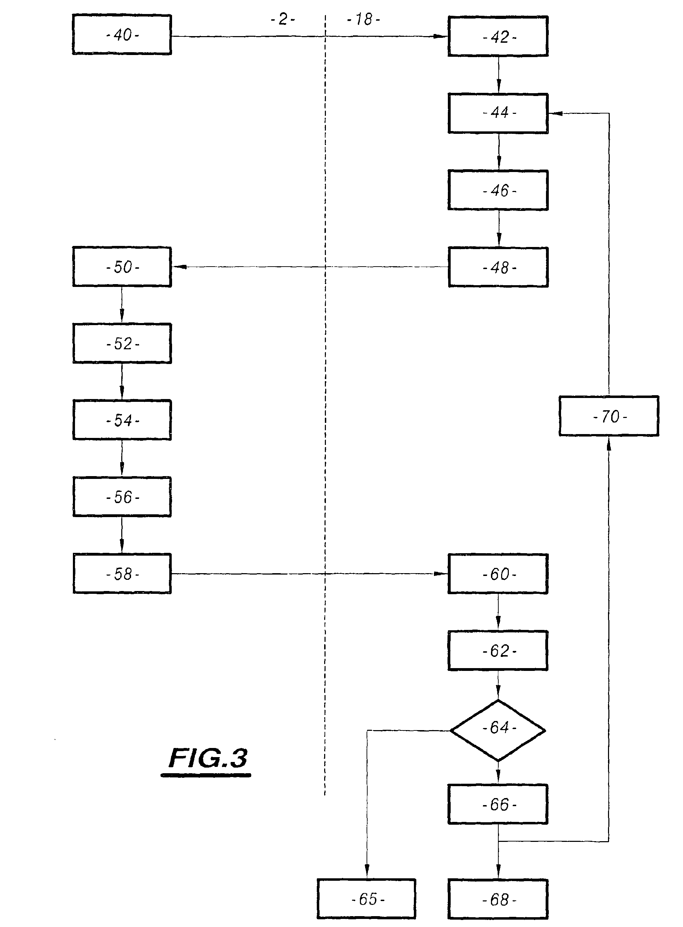

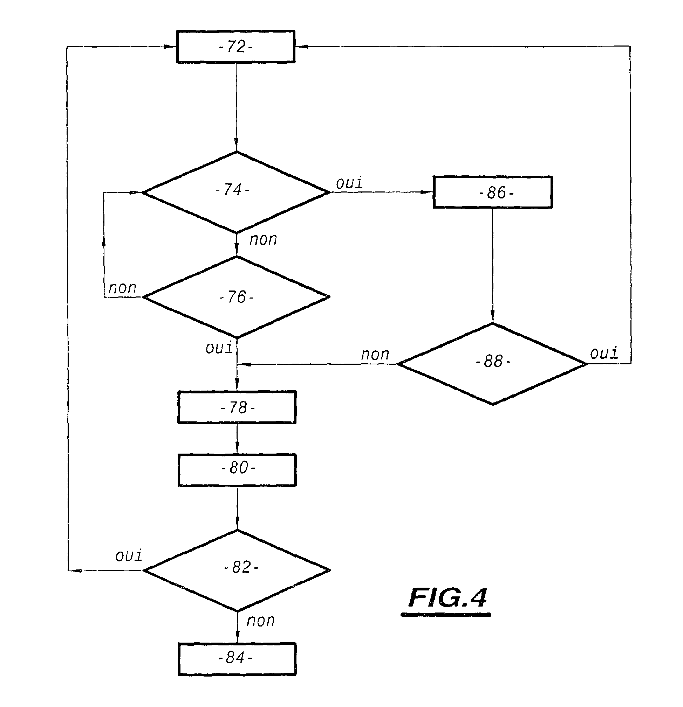

Enfin, dans les premiers moyens 8 d'émission/réception, des moyens 28 de dialogue sont connectés à l'interface 22 d'entrée/sortie, aux moyens 24 de génération de flux binaire et au module de cryptographie 26, pour la commande de ceux-ci. Ces moyens de dialogue 28 sont également connectés à un module d'adaptation 30. Leur fonctionnement sera détaillé lors de la description des figures 3 et 4.

Le module d'adaptation 30, de type classique, est adapté pour le codage canal et le décodage canal d'informations véhiculées soit par le canal principal 14 soit par le canal de secours 16. Dans cet exemple, il est donc bien sûr raccordé au canal principal 14, de type ADSL, par un modem de type classique 32 supportant le protocole de communication Ethernet et au canal de secours 16, de type GSM, au moyen d'un module de radiocommunication 34 de type classique supportant le protocole de communication GSM.

Dans cet exemple, les premiers moyens 8 d'émission/réception d'informations comportent en outre des moyens d'insertion 36 dans ceux-ci, d'une carte à puce 38 pour le stockage sécurisé de données d'identification du site à surveiller 2 et de données formant clé pour le codage et le décodage par le module de cryptage 26 des informations émises et reçues.

Les données formant clé sont constituées par une clé publique connue des moyens de dialogue du site de surveillance et une clé privée accessible uniquement par les moyens de dialogue 28 du site à surveiller.

Les moyens 10 d'émission/réception du site de surveillance sont quant à eux, de type classique et comportent une interface d'entrée/sortie connectée aux moyens 20 d'analyse des informations de surveillance du site de surveillance.

De préférence, pour des raisons de sécurité, les moyens d'insertion 36 permettent l'insertion complète de la carte à puce 38 dans les seconds moyens d'émission/réception 8 et ces derniers sont intégrés dans un coffret 39 formant cage de Faraday alimenté par une alimentation tampon 39a.

De façon classique, ce coffret est muni de capteurs (non représentés) lui signalant toute tentative d'intervention sur celui-ci.

A son tour, le coffret peut alors immédiatement transmettre cette information de tentative d'intervention au site de surveillance 18 via le canal principal 14 ou le canal de secours 16.

De même que les premiers moyens 8 d'émission/réception, les seconds moyens 10 d'émission/réception d'informations du site de surveillance 18 comportent des données d'identification du site de surveillance 18 ainsi que des données formant clé privée et clé publique du site de surveillance 18. Ces données sont stockées dans les seconds moyens 10 d'émission/réception et leur accès est protégé aussi bien contre les attaques physiques que contre les attaques logicielles. Pour cela, des moyens classiques de protection sont mis en oeuvre, tels qu'un contrôle des personnes pénétrant dans le site de surveillance 18, ou un pare-feu informatique contrôlant l'origine et la conformité de tous les messages reçus par les seconds moyens 10 d'émission/réception avant même que ceux-ci les authentifient.

Comme précédemment, la clé publique du site de surveillance 18 est connue des moyens de dialogue 28 du site à surveiller 2, alors que la clé privée est accessible uniquement par ses moyens de dialogue.

Le procédé d'échange sécurisé d'informations entre le site à surveiller 2 et le site de surveillance 18, mis en oeuvre par les moyens de dialogue 28 des moyens d'émission/réception d'informations 8 du site à surveiller 2, va maintenant être décrit en référence à la figure 3.

Lors d'une première étape 40, les premiers moyens d'émission/réception 8 du site à surveiller 2 prennent l'initiative d'émettre une demande de connexion avec le site de surveillance 18 afin de lui transmettre par exemple un message comportant des informations de surveillance. Cette demande de connexion est accompagnée des données d'identification du site à surveiller 2 stockées dans la carte à puce 38 et transmises par les moyens de dialogue 28.

Lors d'une étape 42, les seconds moyens d'émission/réception 10 reçoivent la demande de connexion accompagnée des données d'identification du site à surveiller 2.

Lors d'une étape 44, les seconds moyens d'émission/réception 10 génèrent un nombre aléatoire. Ce nombre aléatoire est ensuite codé par le module de cryptographie des seconds moyens d'émission/réception 10 lors d'une étape 46, selon une méthode de cryptage asymétrique de type classique. Conformément à cette méthode, le module de cryptographie des seconds moyens d'émission 10 code le nombre aléatoire à l'aide de la clé publique du site à surveiller 2 qui a été au préalable identifié par ses données d'identification.

Ensuite, lors d'une étape 48, les seconds moyens d'émission/réception 10 émettent le nombre aléatoire codé à destination du site à surveiller 2.

Lors d'une étape 50, le module d'adaptation 30 des premiers moyens d'émission/réception 8 reçoit ce nombre aléatoire codé et le transmet aux moyens de dialogue 28.

Lors d'une étape 52, les moyens de dialogue 28 commandent le décodage de ce nombre aléatoire par le module de cryptage 26 à l'aide de la clé privée du site à surveiller 2 stockée de façon sécurisée dans la carte à puce 28.

Ensuite, lors d'une étape 54, les moyens de dialogue 28 combinent le nombre aléatoire décodé avec le message contenant des informations de surveillance, selon une fonction prédéfinie quelconque de type classique. A partir de cette combinaison et de la clé privée du site à surveiller 2, le module de cryptographie 26 calcule une signature constituée de données numériques binaires. Le calcul de cette signature, connu dans l'état de la technique, ne sera pas détaillé.

Ensuite, lors d'une étape 56, le module de cryptographie 26 code le message contenant des informations de surveillance à l'aide de la clé publique du site de surveillance 18, sous la commande des moyens de dialogue.

Ce message codé, associé à la signature calculée précédemment, est ensuite émis par les premiers moyens d'émission/réception 8 en direction du site de surveillance 18, lors d'une étape 58.

Lors d'une étape 60, les seconds moyens d'émission/réception 10 reçoivent le message codé associé à la signature du site à surveiller 2.

Ensuite, lors d'une étape 62, le module de cryptage des seconds moyens d'émission/réception 10 décode le message envoyé par les premiers moyens d'émission/réception 8, à l'aide de la clé privée du site de surveillance 18.

Lors d'une étape 64 de vérification, les moyens de dialogue des seconds moyens d'émission/réception 10 vérifient la cohérence de la signature associée au message transmis par le site à surveiller 2, à l'aide du message précédemment décodé et du nombre aléatoire qu'ils ont généré lors de l'étape 44, et grâce à la connaissance de la fonction prédéfinie de combinaison et de la clé publique du site.

Lorsque le résultat de cette vérification est positif, les seconds moyens d'émission/réception 10 transmettent le message reçu aux moyens d'analyse 20, lors d'une étape 66. Sinon le procédé est arrêté à une étape 65, lors de laquelle les moyens de dialogue des seconds moyens d'émission/réception 10 détectent une anomalie sur le canal de transmission utilisé.

Suite à l'étape 66, lorsque le message, contenant par exemple des informations de surveillance, émis par les premiers moyens d'émission/réception 8, n'exige pas de réponse de la part des seconds moyens d'émission/réception 10, le procédé est arrêté lors d'une étape 68. Sinon, lors d'une étape 70, les moyens d'analyse 20 du site de surveillance 18 émettent un message, par exemple un message contenant des informations de commande d'un des moyens 6 d'acquisition d'informations de surveillance du site à surveiller 2, puis on se reporte à l'étape 44 de génération d'un nouveau nombre aléatoire, suivie par l'étape 46 qui consiste alors en un codage, selon la méthode de cryptographie précédemment décrite, du nombre aléatoire associé au message.

Un procédé de surveillance de l'intégrité des canaux de transmission 14 et 16 et du site à surveiller 2, incluant des échanges d'informations tels que décrits précédemment, est représenté à la figure 4 sous forme d'un organigramme.

Selon ce procédé, les premiers moyens d'émission/réception 8 du site à surveiller 2 émettent de façon périodique un message de test à destination des seconds moyens d'émission/réception 10 du site de surveillance 18. Ce message est destiné à être transmis par le canal principal 14.

Ainsi, lors d'une première étape 72 de ce procédé de surveillance des canaux de transmission 14 et 16, les moyens de dialogue des seconds moyens d'émission/réception 10 activent une temporisation d'une durée égale à la période d'émission du message de test sur le canal principal 14.

Lors d'une étape 74, les moyens de dialogue des seconds moyens d'émission/réception 10 testent en permanence la réception d'un message en provenance du site à surveiller 2. Tant que la fin de la temporisation n'est pas détectée, lors d'une étape 76, on se reporte à l'étape 74 de test.

Si par contre, lors de l'étape 76, la fin de la temporisation est détectée, les moyens de dialogue des seconds moyens d'émission/réception 10 commandent le basculement de la transmission des informations du canal principal 14 sur le canal de secours 16, lors d'une étape 78.

Ensuite, lors d'une étape 80, les seconds moyens d'émission/réception 10 émettent un message court, de type SMS classique, en utilisant le canal GSM de secours, selon le procédé d'échange d'informations décrit à la figure 3 à partir de l'étape 44. Simultanément, les moyens de dialogue des seconds moyens d'émission/réception 10 activent une temporisation d'une durée prédéterminée pouvant être différente de la durée de la temporisation précédente.

Lors d'une étape 82, lorsque la fin de la temporisation est détectée, si les premiers moyens d'émission/réception 8 du site à surveiller 2 ont répondu correctement à l'appel émis par les seconds moyens d'émission/réception 10 sur le canal de secours 16, toujours selon procédé d'échange d'informations décrit à la figure 3, le procédé de surveillance de l'intégrité des canaux 14, 16 est reporté à l'étape initiale 72.

Sinon, lors d'une étape finale 84, les seconds moyens d'émission/réception 10 du site de surveillance 18 émettent un signal d'alarme ayant pour conséquence, par exemple, l'intervention d'un surveillant sur le site à surveiller 2.

Par contre, lors de l'étape 74 de test, si un message de test a été reçu par les seconds moyens d'émission/réception 10 avant la fin de la première temporisation, les moyens de dialogue des moyens d'émission/réception 10 répondent à ce message de test lors d'une étape 86, conformément au procédé d'échange d'informations décrit à la figure 3. En effet, lors de cette étape 86, les seconds moyens d'émission/réception 10 transmettent un nombre aléatoire, éventuellement accompagné d'un message contenant des informations relatives à une commande à distance des moyens 6 d'acquisition d'informations de surveillance du site à surveiller 2, en direction du site à surveiller 2. Simultanément, ils activent une temporisation d'une durée prédéterminée quelconque.

Ensuite, lors d'une étape 88, lorsque la fin de la temporisation est détectée, si les premiers moyens d'émission/réception 8 du site à surveiller 2 ont répondu correctement, c'est-à-dire si le procédé d'échange d'informations décrit à la figure 3 s'est terminé par l'étape 66, le procédé de surveillance de l'intégrité des canaux de transmission est reporté à l'étape initiale 72. Sinon, si le procédé d'échange d'informations s'est terminé par l'étape 65, le procédé de surveillance de l'intégrité des canaux est reporté à l'étape 78 de basculement sur le canal de secours 16.

Il apparaît clairement qu'une installation de surveillance à distance selon l'invention permet d'effectuer cette surveillance d'une façon sécurisée en prévoyant, d'une part, le basculement possible d'un canal principal 14 vers un canal de secours 16, en cas de dysfonctionnement de ce canal principal 14, et d'autre part, des moyens d'échange d'informations codées d'identification des sites pour sécuriser l'échange d'informations entre ceux-ci.

On notera enfin que l'invention n'est pas limitée au mode de réalisation décrit.

Ainsi, par exemple, dans le procédé de surveillance de l'intégrité des canaux de transmission 14,16 et du site à surveiller 2, lors de l'émission périodique du message de test, les premiers moyens d'émission/réception du site à surveiller activent une temporisation supérieure à la période d'émission de ce message.

Si aucune réponse n'est obtenue avant la fin de la temporisation, ils renvoient alors ce message de test sur le canal de secours 16.

En variante également, dans le procédé d'échange sécurisé d'informations entre le site à surveiller 2 et le site de surveillance 18, si le message émis par les premiers moyens d'émission/réception 8, contenant par exemple des informations de surveillance, est d'une taille supérieure à un seuil prédéterminé, par exemple dans le cas d'une transmission de séquence vidéo, le message reçu par les moyens d'analyse 20 du site de surveillance 18, en direction du site à surveiller 2, comprend une clé de cryptographie symétrique classique.

Avec cette clé, le message peut à la fois être codé par le module de cryptographie 26 du site à surveiller 2 et décodé par le module de cryptographie des seconds moyens d'émission/réception 10 du site de surveillance 18, de façon plus rapide qu'avec une méthode de cryptographie asymétrique.

D'autre part, le module de cryptographie 26 du site à surveiller 2 peut, dans ce cas, calculer la signature à partir de la combinaison du nombre aléatoire et d'une empreinte ou d'un condensé du message à transmettre, ladite empreinte étant obtenue par une fonction d'empreinte de type classique et ledit condensé étant également obtenu par un procédé de type classique.

Dans ce cas, si le canal principal est supporté par une liaison de type Réseau Numérique à Intégration de Services, les messages de grande taille sont retransmis par les premiers moyens d'émission/réception 8 du site à surveiller 2 sur un ou deux canaux B de ce réseau, après établissement d'une communication.

## Revendications

1. Installation de surveillance à distance d'au moins un site à surveiller (2) à partir d'un site de surveillance (18) raccordé par des moyens (12) de transmission d'informations, le site à surveiller (2) comportant des moyens (4) de surveillance de ce site comprenant des moyens (6) d'acquisition d'informations de surveillance, raccordés à des premiers moyens (8) d'émission/réception de ces informations de surveillance, eux-mêmes raccordés aux moyens (12) de transmission d'informations et le site de surveillance (18) comportant des seconds moyens (10) d'émission/réception d'informations raccordés aux moyens (12) de transmission d'informations et à des moyens (20) d'analyse des informations de surveillance, dans laquelle :
- les moyens (12) de transmission d'informations comportent un canal principal (14) et un canal de secours (16) de transmission d'informations, et
- les premiers moyens (8) d'émission/réception du site à surveiller (2) comprennent des moyens (28) de surveillance de l'intégrité du canal principal de transmission d'informations entre ces sites pour basculer la transmission des informations du canal principal (14) sur le canal de secours (16) en cas de dysfonctionnement de ce canal principal et des moyens (28) d'échange d'informations codées d'identification des sites pour sécuriser l'échange d'informations entre ceux-ci, **caractérisée en ce que** :
a) les premiers moyens (8) d'émission/réception du site à surveiller (2) comprennent des moyens (28) de surveillance de l'intégrité du canal de secours,
b) les seconds moyens (10) d'émission/réception du site de surveillance comprennent des moyens de surveillance de l'intégrité du canal principal et du canal de secours, et
c) les moyens (8, 10) d'émission/réception sont aptes à engendrer un signal d'alarme en cas de dysfonctionnement de ce canal de secours.

2. Installation de surveillance à distance selon la revendication 1, **caractérisée en ce que** les moyens de transmission (12) d'informations comportent un réseau (13) de transmission d'informations et des moyens de raccordement des seconds moyens (10) d'émission/réception du site de surveillance (18) à ce réseau (13) et **en ce que** le canal principal (14) et le canal de secours (16) transmettent des informations entre ce réseau (13) et les premiers moyens (8) d'émission/réception du site à surveiller (2).

3. Installation de surveillance à distance selon la revendication 2, **caractérisée en ce que** les moyens de raccordement des seconds moyens (10) d'émission/réception au réseau (13) de transmission d'informations comportent au moins l'un des éléments parmi une liaison (15) filaire de transmission à haut débit avec double parcours et une liaison hertzienne (17).

4. Installation de surveillance à distance selon l'une quelconque des revendications 1 à 3, **caractérisée en ce que** le canal principal (14) est à tarification forfaitaire des transmissions et **en ce que** le support physique du canal de secours (16) est différent de celui du canal principal.

5. Installation de surveillance à distance selon la revendication 4, **caractérisée en ce que** le canal principal (14) est choisi parmi l'un des éléments de l'ensemble constitué par un réseau câblé de vidéotransmission, une liaison de type ADSL, une liaison de type SDSL, un Réseau Numérique à Intégration de Services, un réseau de radiocommunication à ressources partagées, un réseau de communication à terminaison hertzienne et un réseau de communication mobile.

6. Installation de surveillance à distance selon la revendication 4 ou 5, **caractérisée en ce que** le canal secondaire (16) est choisi parmi l'un des éléments de l'ensemble constitué par un réseau câblé de vidéotransmission, une liaison ADSL, une liaison SDSL, un canal D sur Réseau Numérique à Intégration de Services, un réseau de radiocommunication à ressources partagées, une boucle locale de radiocommunication, un réseau de communication mobile notamment de type GSM.

7. Installation de surveillance à distance selon l'une quelconque des revendications 1 à 6, **caractérisée en ce que** les moyens (12) de transmission d'informations constituent un réseau privé virtuel.

8. Installation de surveillance à distance selon l'une quelconque des revendications 1 à 7, **caractérisée en ce que** les moyens (28) de surveillance de l'intégrité des canaux comportent des moyens d'émission périodique d'un message de test (en 40).

9. Installation de surveillance à distance selon l'une quelconque des revendications 1 à 8, **caractérisée en ce que** les moyens (28) d'échange d'informations codées d'identification des sites comportent, dans un premier site choisi parmi l'un quelconque des deux sites, des moyens de codage (en 46) d'un nombre aléatoire et des moyens d'émission (en 48) de ce nombre codé, dans le second, des moyens de décodage (en 52) de ce nombre codé, des moyens d'élaboration (en 54) d'une signature binaire à partir d'une combinaison prédéterminée du nombre aléatoire et d'informations sur l'autre site et des moyens de codage (en 56) de ces informations, et dans le premier site, des moyens de décodage (en 62) de ces informations et des moyens de vérification (en 64) de la validité de la signature.

10. Installation de surveillance à distance selon la revendication 9, **caractérisée en ce que** les moyens de codage et de décodage comportent des moyens de cryptographie symétrique.

11. Installation de surveillance à distance selon l'une quelconque des revendications 1 à 10, **caractérisée en ce que** les premiers moyens (8) d'émission/réception du site à surveiller comportent une carte à puce (38) pour le stockage sécurisé de données formant clé pour le codage et le décodage des informations transmises entre les deux sites.

12. Installation de surveillance à distance selon la revendication 11, **caractérisée en ce que** la carte à puce (38) comporte en outre des données d'identification du site à surveiller.

13. Installation de surveillance à distance selon l'une quelconque des revendications 1 à 12, **caractérisée en ce que** les premiers moyens (8) d'émission/réception du site à surveiller (2) sont intégrés dans un coffret (39) formant cage de Faraday alimenté par une source d'alimentation tampon (39a).

14. Installation selon l'une quelconque des revendications précédentes, dans laquelle :
- les premiers moyens (8) d'émission/réception du site à surveiller sont aptes à émettre de façon périodique un message de test à destination des seconds moyens (10) d'émission/réception du site de surveillance, et
- les seconds moyens (10) d'émission/réception sont aptes à :
• tester la réception du message de test en provenance des premiers moyens d'émission/réception du site à surveiller tant que la fin d'une temporisation n'a pas été détectée, et
• commander le basculement sur le canal de secours si la fin de la temporisation est détectée.

## Claims

1. Remote monitoring installation for at least one site to be monitored (2) from a monitoring site (18) that is connected by information transmission means (12), the site to be monitored (2) including means (4) for monitoring this site comprising monitoring information acquisition means (6), connected to first means (8) for transmitting/receiving this monitoring information, which are themselves connected to the information transmission means (12), and the monitoring site (18) including second means (10) for transmitting/receiving information which are connected to the information transmission means (12) and to means (20) for analysing the monitoring information, in which installation:
- the information transmission means (12) include a main channel (14) and a backup channel (16) for transmitting information, and
- the first transmission/reception means (8) of the site to be monitored (2) comprise means (28) for monitoring the integrity of the main channel for transmitting information between these sites in order to switch over the transmission of information from the main channel (14) to the backup channel (16) in the event that this main channel malfunctions, and means (28) for the exchange of coded information identifying sites in order to secure the exchange of information between them, which installation is **characterized in that**:
a) the first transmission/reception means (8) of the site to be monitored (2) comprise means (28) for monitoring the integrity of the backup channel,
b) the second transmission/reception means (10) of the monitoring site comprise means for monitoring the integrity of the main channel and the backup channel, and
c) the transmission/reception means (8, 10) are able to generate an alarm signal in the event that this backup channel malfunctions.

2. Remote monitoring installation according to Claim 1, **characterized in that** the information transmission means (12) include an information transmission network (13) and means for connecting the second transmission/reception means (10) of the monitoring site (18) to this network (13), and **in that** the main channel (14) and the backup channel (16) transmit information between this network (13) and the first transmission/reception means (8) of the site to be monitored (2).

3. Remote monitoring installation according to Claim 2, **characterized in that** the means for connecting the second transmission/reception means (10) to the information transmission network (13) include at least one of the items among a high-speed dual-path cable-based transmission link (15) and a radio link (17).

4. Remote monitoring installation according to any one of Claims 1 to 3, **characterized in that** the main channel (14) is tariffed at a flat rate for transmissions and **in that** the physical medium of the backup channel (16) is different from that of the main channel.

5. Remote monitoring installation according to Claim 4, **characterized in that** the main channel (14) is chosen from one of the items of the group formed by a cable-based video-transmission network, an ADSL line, an SDSL line, an Integrated Services Digital Network, a trunked radio network, a communication network with radio termination and a mobile communication network.

6. Remote monitoring installation according to either Claim 4 or Claim 5, **characterized in that** the secondary channel (16) is chosen from one of the items of the group formed by a cable-based video-transmission network, an ADSL line, an SDSL line, a D channel on an Integrated Services Digital Network, a trunked radio network, a radio local loop and a mobile communication network in particular of the GSM type.

7. Remote monitoring installation according to any one of Claims 1 to 6, **characterized in that** the information transmission means (12) form a virtual private network.

8. Remote monitoring installation according to any one of Claims 1 to 7, **characterized in that** the means (28) for monitoring the integrity of channels include means for periodically transmitting a test message (at 40).

9. Remote monitoring installation according to any one of Claims 1 to 8, **characterized in that** the means (28) for exchanging coded information identifying sites include, in a first site chosen from either of the two sites, means for encoding (at 46) a random number and means for transmitting (at 48) this coded number, in the second, means for decoding (at 52) this coded number, means for working out (at 54) a binary signature from a predetermined combination of the random number and information on the other site and means for encoding (at 56) this information, and in the first site, means for decoding (at 62) this information and means for checking (at 64) the validity of the signature.

10. Remote monitoring installation according to Claim 9, **characterized in that** the encoding and decoding means include asymmetric cryptography means.

11. Remote monitoring installation according to any one of Claims 1 to 10, **characterized in that** the first transmission/reception means (8) of the site to be monitored include a smart card (38) for the secure storage of data forming a key for the coding and decoding of information transmitted between the two sites.

12. Remote monitoring installation according to Claim 11, **characterized in that** the smart card (38) additionally includes data identifying the site to be monitored.

13. Remote monitoring installation according to any one of Claims 1 to 12, **characterized in that** the first transmission/reception means (8) of the site to be monitored (2) are integrated in an enclosure (39) forming a Faraday cage and powered by a buffer power supply source (39a).

14. Installation according to any one of the preceding claims, in which:
- the first transmission/reception means (8) of the site to be monitored are able to periodically transmit a test message to the second transmission/reception means (10) of the monitoring site, and
- the second transmission/reception means (10) are able to:
• test the reception of the test message from the first transmission/reception means of the site to be monitored while the end of a time-out has not been detected, and
• control the switchover to the backup channel if the end of the time-out is detected.

## Patentansprüche

1. Anlage zur Fernüberwachung mindestens eines zu überwachenden Standorts (2) ausgehend von einem Überwachungsstandort (18), der über Informationsübertragungseinrichtungen (12) angeschlossen ist, wobei der zu überwachende Standort (2) Einrichtungen (6) zur Erfassung von Überwachungsinformationen enthaltende Überwachungseinrichtungen (4) dieses Standorts aufweist, die an erste Sende-/Empfangseinrichtungen (8) dieser Überwachungsinformationen angeschlossen sind, die selbst an die Einrichtungen (12) zur Informationsübertragung angeschlossen sind, und wobei der Überwachungsstandort (18) zweite Sende-/Empfangseinrichtungen (10) von Informationen aufweist, die an die Informationsübertragungseinrichtungen (12) und an Einrichtungen (20) zur Analyse der Überwachungsinformationen angeschlossen sind, in der:
- die Einrichtungen (12) zur Informationsübertragung einen Hauptkanal (14) und einen Hilfskanal (16) zur Informationsübertragung aufweisen, und
- die ersten Sende-/Empfangseinrichtungen (8) des zu überwachenden Standorts (2) Einrichtungen (28) zur Überwachung der Unversehrtheit des Hauptkanals der Informationsübertragung zwischen diesen Standorten, um die Übertragung der Informationen bei einer Funktionsstörung dieses Hauptkanals vom Hauptkanal (14) auf den Hilfskanal (16) umzuschalten, und Einrichtungen (28) zum Austausch von codierten Identifikationsinformationen der Standorte aufweisen, um den Informationsaustausch zwischen diesen zu sichern, **dadurch gekennzeichnet, dass**:
a) die ersten Sende-/Empfangseinrichtungen (8) des zu überwachenden Standorts (2) Einrichtungen (28) zur Überwachung der Unversehrtheit des Hilfskanals aufweisen,
b) die zweiten Sende-/Empfangseinrichtungen (10) des Überwachungsstandorts Einrichtungen zur Überwachung der Unversehrtheit des Hauptkanals und des Hilfskanals aufweist, und
c) die Sende-/Empfangseinrichtungen (8, 10) in der Lage sind, im Fall einer Funktionsstörung dieses Hilfskanals ein Alarmsignal zu erzeugen.

2. Anlage zur Fernüberwachung nach Anspruch 1, **dadurch gekennzeichnet, dass** die Einrichtungen (12) zur Informationsübertragung ein Informationsübertragungsnetz (13) und Anschlusseinrichtungen der zweiten Sende-/Empfangeinrichtungen (10) des Überwachungsstandorts (18) an dieses Netz (13) aufweisen, und dass der Hauptkanal (14) und der Hilfskanal (16) Informationen zwischen diesem Netz (13) und den ersten Sende-/Empfangseinrichtungen (8) des zu überwachenden Standorts (2) übertragen.

3. Anlage zur Fernüberwachung nach Anspruch 2,
**dadurch gekennzeichnet, dass** die Anschlusseinrichtungen der zweiten Sende-/Empfangseinrichtungen (10) an das Informationsübertragungsnetz (13) mindestens eines der Elemente, eine drahtgebundene Hochgeschwindigkeits-Übertragungsverbindung (15) mit doppeltem Durchgang und einer Funkverbindung (17), aufweisen.

4. Anlage zur Fernüberwachung nach einem der Ansprüche 1 bis 3, **dadurch gekennzeichnet, dass** der Hauptkanal (14) eine Pauschaltarifierung der Übertragungen hat, und dass der physikalische Träger des Hilfskanals (16) sich von demjenigen des Hauptkanals unterscheidet.

5. Anlage zur Fernüberwachung nach Anspruch 4, **dadurch gekennzeichnet, dass** der Hauptkanal (14) aus einem der Elemente der Einheit ausgewählt wird, die aus einem verkabelten Videoübertragungsnetz, einer Verbindung vom Typ ADSL, einer Verbindung vom Typ SDSL, einem dienstintegrierten Digitalnetz (ISDN), einem Bündelfunknetz, einem Kommunikationsnetz mit Funkanschluss und einem Mobilkommunikationsnetz besteht.

6. Anlage zur Fernüberwachung nach Anspruch 4 oder 5, **dadurch gekennzeichnet, dass** der sekundäre Kanal (16) aus einem der Elemente der Einheit ausgewählt wird, die aus einem verkabelten Videoübertragungsnetz, einer ADSL-Verbindung, einer SDSL-Verbindung, einem Kanal D in einem dienstintegrierten Digitalnetz, einem Bündelfunknetz, einer lokalen Funkschleife, einem Mobilkommunikationsnetz insbesondere vom Typ GSM besteht.

7. Anlage zur Fernüberwachung nach einem der Ansprüche 1 bis 6, **dadurch gekennzeichnet, dass** die Informationsübertragungseinrichtungen (12) ein privates virtuelles Netz bilden.

8. Anlage zur Fernüberwachung nach einem der Ansprüche 1 bis 7, **dadurch gekennzeichnet, dass** die Überwachungseinrichtungen (28) der Unversehrtheit der Kanäle Einrichtungen zum periodischen Senden einer Textmitteilung (in 40) aufweisen.

9. Anlage zur Fernüberwachung nach einem der Ansprüche 1 bis 8, **dadurch gekennzeichnet, dass** die Einrichtungen (28) für den Austausch von codierten Standort-Identifikationsinformationen in einem ersten Standort, der aus einem beliebigen der zwei Standorte ausgewählt wird, Codiereinrichtungen (in 46) einer Zufallszahl und Sendeeinrichtungen (in 48) dieser codierten Zahl, in dem zweiten Decodiereinrichtungen (in 52) dieser codierten Zahl, Einrichtungen (in 54) zur Erarbeitung einer binären Signatur ausgehend von einer vorherbestimmten Kombination der Zufallszahl und von Informationen über den anderen Standort und Einrichtungen (in 56) zum Codieren dieser Informationen, und im ersten Standort Einrichtungen (in 62) zum Decodieren dieser Informationen und Einrichtungen (in 64) zum Überprüfen der Gültigkeit der Signatur aufweisen.

10. Anlage zur Fernüberwachung nach Anspruch 9, **dadurch gekennzeichnet, dass** die Codier- und Decodiereinrichtungen Mittel zur asymmetrischen Kryptographie aufweisen.

11. Anlage zur Fernüberwachung nach einem der Ansprüche 1 bis 10, **dadurch gekennzeichnet, dass** die ersten Sende-/Empfangseinrichtungen (8) des zu überwachenden Standorts eine Chipkarte (38) zum gesicherten Speichern von Daten aufweisen, die einen Schlüssel für das Codieren und Decodieren der Informationen bilden, die zwischen den zwei Standorten übertragen werden.

12. Anlage zur Fernüberwachung nach Anspruch 11, **dadurch gekennzeichnet, dass** die Chipkarte (38) außerdem Identifikationsdaten des zu überwachenden Standorts aufweist.

13. Anlage zur Fernüberwachung nach einem der Ansprüche 1 bis 12, **dadurch gekennzeichnet, dass** die ersten Sende-/Empfangeinrichtungen (8) des zu überwachenden Standorts (2) in einen Kasten (39) integriert sind, der einen Faraday'schen Käfig bildet, der von einer Puffer-Versorgungsquelle (39a) gespeist wird.

14. Anlage nach einem der vorhergehenden Ansprüche, bei der:
- die ersten Sende-/Empfangseinrichtungen (8) des zu überwachenden Standorts in der Lage sind, periodisch eine Testmitteilung an die zweiten Sende-/Empfangseinrichtungen (10) des Überwachungsstandorts zu senden, und
- die zweiten Sende-/Empfangseinrichtungen (10) in der Lage sind:
• den Empfang der von den ersten Sende-/Empfangseinrichtungen des zu überwachenden Standorts kommende Testmitteilung zu testen, solange kein Ende einer Verzögerung erfasst wurde, und
• das Umschalten auf den Hilfskanal zu steuern, wenn das Ende der Verzögerung erfasst wird.
